# EUROPÄISCHE PATENTSCHRIFT

(11) **EP 0 778 309 B1**
(45) Veröffentlichungstag und Bekanntmachung des Hinweises auf die Patenterteilung: **03.04.2002**
(21) Anmeldenummer: 96118972.7
(22) Anmeldetag: 27.11.1996
(51) Int. Cl.: C08J 9/00

(54) **Schaumstoffplatten mit verminderter Wärmeleitfähigkeit**
Foam panel having a reduced thermal conductivity
Plaques de mousse à conductivité thermique réduite

(30) Priorität: 04.12.1995 DE 19545097
(43) Veröffentlichungstag der Anmeldung: 11.06.1997
(73) Patentinhaber: BASF AKTIENGESELLSCHAFT, 67056 Ludwigshafen (DE)
(72) Erfinder: Scherzer, Dietrich, Dr., 67433 Neustadt (DE); Hahn, Klaus, Dr., 67281 Kirchheim (DE); Alicke, Gerhard, 67549 Worms (DE); Turznik, Gerhard, Dr., 67269 Grünstadt (DE); Dietzen, Franz-Josef, Dr., 67071 Ludwigshafen (DE)

(56) Entgegenhaltungen:
- WO-A-94/13721
- DE-A- 2 950 098
- US-A- 5 373 026
- CHEMICAL ABSTRACTS, vol. 106, no. 8, 23.Februar 1987 Columbus, Ohio, US; abstract no. 50820, MISHIMA, SEIZO ET AL: "Carbon black-containing polystyrene beads" XP002051838 & JP 61 171 705 A (HITACHI CHEMICAL CO., LTD., JAPAN)
- CHEMICAL ABSTRACTS, vol. 93, no. 2, 14.Juli 1980 Columbus, Ohio, US; abstract no. 9053, HISHIDA, IWAO: "Fireproofing agents for resins" XP002060092 & JP 55 021 439 A (JAPAN)

## Beschreibung

Die Erfindung betrifft Schaumstoffplatten mit einer Dichte von 20 bis 200 g·l⁻¹ und einem Querschnitt von mindestens 50 cm² auf Basis von Styrolpolymerisaten, die eine verminderte wärmeleitfähigkeit aufweisen.

Extrudierte Polystyrol-Schaumstoffe (XPS) werden in großem Maß zum Isolieren von Gebäuden und Gebäudeteilen eingesetzt. Für diesen Anwendungszweck müssen die Schaumstoffplatten eine möglichst niedrige Wärmeleitfähigkeit aufweisen. Neuerdings werden aus Umweltschutzgründen zur Herstellung von XPS-Platten halogenfreie Treibmittel, vorzugsweise CO₂-haltige Treibmittelgemische eingesetzt. CO₂ diffundiert aber wesentlich rascher als fluorhaltige Gase aus den Schaumstoffzellen heraus und wird durch Luft ersetzt. Aus diesem Grund ist die Wärmeleitfähigkeit von XPS-Platten, die mit CO₂-haltigen Treibmitteln hergestellt wurden, etwas höher als die von XPS-Platten, die mit Fluorkohlenwasserstoffen hergestellt wurden. Der Erfindung lag daher die Aufgabe zugrunde, XPS-Platten mit möglichst niedriger Wärmeleitfähigkeit bereitzustellen. Weitere Ziele der Erfindung waren die Herstellung von XPS-Platten mit geringer Entflammbarkeit.

Diese Aufgabe wird gelöst durch Schaumstoffplatten mit einer Dichte von 20 bis 200 g·l⁻¹ und einem Querschnitt von mindestens 50 cm² auf Basis von Styrolpolymerisaten, die 1 bis 10 Gew.-% Flammruß mit einer Partikelgröße von 70 bis 150 nm, vorzugsweise von 80 bis 120 nm enthalten und derart flammfest ausgerüstet sind, daß der Schaumstoff den Brandtest B2 (nach DIN 4102) besteht.

In EP-A 372 343 sind extrudierte Schaumstoffplatten beschrieben, die 4 bis 10 Gew.-% Ruß mit einer Partikelgröße von 65 nm sowie bis zu 2 Gew.-% Hexabromcyclododecan, jedoch keinen Flammschutzsynergisten enthalten. Als Treibmittel werden Gemische aus Difluorchlorethan, Ethylchlorid und Kohlendioxid eingesetzt.

Styrolpolymerisate im Sinne dieser Erfindung sind Polystyrol und Mischpolymerisate des Styrols, die mindestens 50 Gew.-% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen wie Vinylcarbazol, Maleinsäureanhydrid oder auch geringe Mengen an Verbindungen, die zwei polymerisierbare Doppelverbindungen enthalten wie Butadien, Divinylbenzol oder Butandioldiacrylat.

Als Treibmittel können die üblichen flüchtigen organischen Verbindungen wie Fluorchlorkohlenwasserstoffe, Fluorkohlenwasserstoffe, Kohlenwasserstoffe, Alkohole, Ketone und Ether verwendet werden. Bevorzugt sind jedoch halogenfreie Treibmittel und Treibmittelgemische, z.B. anorganische Gase wie Kohlendioxid, Stickstoff, Argon und Ammoniak, gegebenenfalls im Gemisch mit Alkoholen, Kohlenwasserstoffen und Ethern.

Bevorzugte Treibmittelgemische sind daher:
- a) 1 bis 100 Gew.-%: Kohlendioxid,
- b) bis zu 95 Gew.-%: eines Ethers aus der Gruppe Dimethylether, Methylethylether und Methylvinylether,
- c) bis zu 60 Gew.-%: eines Alkohols oder Ketons mit einem Siedepunkt zwischen 56 und 100°C, und
- d) bis zu 30 Gew.-%: eines aliphatischen C₃-C₆-Kohlenwasserstoffs

Besonders bevorzugte Treibmittelgemische bestehen aus:
- a) 20 bis 90 Gew.-%: Kohlendioxid
- b) 1 bis 30 Gew.-%: Dimethylether,
- c) 0 bis 60 Gew.-%: Ethanol, und
- d) bis zu 10 Gew.-%: eines aliphatischen C₃-C₆-Kohlenwasserstoffs,
bzw. aus:
- a) 20 bis 95 Gew.-%: Kohlendioxid
- c) 80 bis 5 Gew.-%: Ethanol und
- d) 0 bis 10 Gew.-%: eines aliphatischen C₃-C₆-Kohlenwasserstoffs

Auch Kohlendioxid allein kann eingesetzt werden.

Die Treibmittel werden in einer Menge von 3 bis 15 Gew -%, vorzugsweise 6 bis 12 Gew.-%, bezogen auf das Styrolpolymerisat, verwendet.

Die Schaumstoffplatten enthalten erfindungsgemäß 1 bis 10, vorzugsweise 2 bis 8 Gew.-% Flammruß mit einer Primär-Partikelgröße von 70 bis 150 nm und einer spezifischen Oberfläche nach BET von vorzugsweise 10 bis 100 m²·g⁻¹, z.B. Flammruß 101 der Fa. DEGUSSA.

Damit die geforderten guten Brandschutzeigenschaften erreicht werden, müssen die Schaumstoffplatten Flammschutzmittel enthalten, vorzugsweise 0,5 bis 5 Gew.-% organische Bromverbindungen mit einem Bromgehalt von mehr als 70 %, wie z.B. Pentabrommonochlorcyclohexan, oder vorzugsweise Hexabromcyclododecan. Entweder müssen die Bromverbindungen allein in Mengen von mehr als 2 Gew.-% zugesetzt werden, oder vorzugsweise zusammen mit 0,1 bis 0,5 Gew.-% einer C-C- oder O-O-labilen organischen Verbindung, wie Dicumylperoxid oder bevorzugt Dicumyl. Es hat sich gezeigt, daß die Brandeigenschaften bei Verwendung des oben genannten Flammrußes besser sind als bei üblichen Rußsorten, z.B. Furnacerußen, mit einer Partikelgröße von weniger als 80 nm. Zusätzlich zu Flammruß können jedoch übliche Ruße in untergeordneten Mengen zugesetzt werden.

Mit Hilfe der genannten Maßnahmen bestehen die Schaumstoffplatten den Brandtest B2, in vielen Fällen sogar den Brandtest B1 (nach DIN 4102).

Als weitere übliche Zusatz- und/oder Hilfsstoffe können der Polystyrolmatrix Antistatika, Stabilisatoren, Farbstoffe, Füllstoffe und/oder Keimbildner in üblichen Mengen zugesetzt werden.

Die Schaumstoffplatten können dadurch hergestellt werden, daß man ein Gemisch aus dem Styrolpolymerisat, 3 bis 15 Gew.-% des Treibmittels und den weiteren, oben beschriebenen Zusatzstoffen extrudiert und verschäumt.

Die in den folgenden Beispielen genannten Teile und Prozente beziehen sich auf das Gewicht:

### Beispiele 1 bis 3

Eine Mischung aus 90-97 Teilen Polystyrol und den in der Tabelle angegebenen Mengen Flammruß 101 (mittlere Teilchengröße 90 nm) als 20 %iger batch in Polystyrol, wurde einem Extruder mit einem inneren Schneckendurchmesser von 53 mm kontinuierlich zugeführt und aufgeschmolzen. Durch eine in dem Extruder angebrachte Einlaßöffnung wurde ein Treibmittelgemisch von 3,5% CO₂ und 3,25% Ethanol, jeweils bezogen auf Polystyrol, kontinuierlich in den Extruder eingedrückt und in die Schmelze eingemischt. Das im Extruder gleichmäßig geknetete Schmelze-Treibmittelgemisch wurde sodann einem zweiten Extruder mit einem Schneckendurchmesser von 90 mm zugeführt und dort während einer Verweilzeit von ca. 10 min auf die zum Schäumen notwendige Temperatur abgekühlt. Diese gekühlte Schmelze wurde sodann durch eine Schlitzdüse mit 50 mm Breite in die Atmosphäre extrudiert. Der dabei entstehende Schaum wurde durch ein Werkzeug zu Platten mit 30 mm Dicke und 150 mm Breite geformt. So wurden gleichmäßige, geschlossenzellige und formstabile Schaumstoffkörper erhalten.

An den so erhaltenen Schaumstoffplatten wurde die Wärmeleitfähigkeit mit einem Wärmestrommeßplatten-Gerät in Anlehnung an DIN 52 616 (Meßtemperatur 23°C) bestimmt.

### Ergebnisse:

| Beispiel | Menge Ruß % | Wärmeleitfähigkeit W/mK |
|---|---|---|
| 1 | 0 | 0,368 |
| 2 | 3 | 0,337 |
| 3 | 6 | 0,332 |

Das Beispiel 1 ist nicht erfindungsgemäß

### Beispiele 4 und 5

In den folgenden Beispielen wurden die Rußsorten variiert und an den erhaltenen Schaumstoffplatten der Brandtest B2 durchgeführt.

Beispiel 4 ist eine Wiederholung des Beispiels 2; in Beispiel 5 (nicht erfindungsgemäß) wurde statt Flammruß 101 der Furnace-Ruß ELFTEX 415 der Fa. CABOT mit einer Teilchengröße von 25 nm eingesetzt.

### Ergebnisse:

| Beispiel | Ruß | B2 - Test | Wärmeleitfähigkeit |
|---|---|---|---|
| 4 | Flammruß | bestanden | 0,337 |
| 5 | Furnaceruß | nicht bestanden | 0,353 |

### Beispiele 6 bis 10

Beispiel 2 wurde wiederholt, wobei die Mengen an Hexabromcyclododecan und Dicumyl variiert wurden. An den Schaumstoffplatten wurde wieder der Brandtest B2 durchgeführt.

| Beispiel | % Hexabromid | % Dicumyl | B2 - Test |
|---|---|---|---|
| 6 | 0,7 | 0,14 | bestanden |
| 7 | 0,7 | - | nicht bestanden |
| 8 | 1, 5 | 0,2 | bestanden |
| 9 | 1,5 | - | nicht bestanden |
| 10 | 3.0 | - | bestanden |

## Patentansprüche

1. Schaumstoffplatten mit einer Dichte von 20 bis 200 g·l⁻¹ und einem Querschnitt von mindestens 50 cm² auf Basis von Styrolpolymerisaten, die 1 bis 10 Gew.-% Ruß, sowie Flammschutzmittel enthalten, **dadurch gekennzeichnet, daß** der Ruß Flammruß mit einer Partikelgröße von 70 bis 150 nm ist, und daß der Schaumstoff derart flammfest ausgerüstet ist, daß er den Brandtest B2 (nach DIN 4102) besteht.

2. Schaumstoffplatten nach Anspruch 1, **dadurch gekennzeichnet, daß** sie 0,5 bis 5 Gew.-% einer bromhaltigen organischen Verbindung mit einem Bromgehalt von mehr als 70 % als Flammschutzmittel, sowie 0,1 bis 0,5 Gew.-% einer C-C- oder O-O-labilen organischen Verbindung als Flammschutzsynergist enthalten.

3. Schaumstoffplatten nach Anspruch 1, **dadurch gekennzeichnet, daß** das Flammschutzmittel Hexabromcyclododecan und der Flammschutzsynergist Dicumyl ist.

4. Schaumstoffplatten nach Anspruch 1, **dadurch gekennzeichnet, daß** sie geschlossene Zellen enthalten, die frei von halogenhaltigen Gasen sind.

5. Verfahren zur Herstellung der Schaumstoffplatten nach Anspruch 1, **dadurch gekennzeichnet, daß** man ein Gemisch aus einem Styrolpolymerisat, 3 bis 15 Gew.-% eines flüchtigen Treibmittels, 1 bis 10 Gew.-% Ruß, 0,5 bis 5 Gew.-% einer bromhaltigen organischen Verbindung mit einem Bromgehalt von mehr als 70 % sowie 0,1 bis 0,5 Gew.-% einer C-C- oder O-O-labilen organischen Verbindung bei Temperaturen oberhalb des Schmelzpunktes des Styrolpolymerisats extrudiert und verschäumt.

## Claims

1. A foam board having a density of from 20 to 200 g·l⁻¹ and a cross section of at least 50 cm² based on styrene polymers which comprise from 1 to 10% by weight of carbon black and also flame retardants, wherein the carbon black is lampblack having a particle size of from 70 to 150 nm, and wherein the foam is rendered flame retardant in such a way that it passes the B2 fire test (in accordance with DIN 4102).

2. A foam board as claimed in Claim 1, which comprises from 0.5 to 5% by weight of a bromine-containing organic compound having a bromine content of greater than 70% as flame retardant, and from 0.1 to 0.5% by weight of a C-C- or O-O-labile organic compound as flame retardant synergist.

3. A foam board as claimed in Claim 1, wherein the flame retardant is hexabromocyclododecane and the flame retardant synergist is dicumyl.

4. A foam board as claimed in Claim 1, which contains closed cells which are free from halogen-containing gases.

5. A process for the production of a foam board as claimed in Claim 1, wherein a mixture of a styrene polymer, from 3 to 15% by weight of a volatile blowing agent, from 1 to 10% by weight of carbon black, from 0.5 to 5% by weight of a bromine-containing organic compound having a bromine content of greater than 70%, and from 0.1 to 0.5% by weight of a C-C- or O-O-labile organic compound is extruded and foamed at temperatures above the melting point of the styrene polymer.

## Revendications

1. Plaques de mousse présentant une densité de 20 à 200 g·l⁻¹ et une section transversale d'au moins 50 cm² à base de polymères de styrène, qui contiennent 1 à 10% en poids de noir de fumée, ainsi que des agents ignifuges, **caractérisées en ce que** le noir de fumée est une suie présentant une taille de particules de 70 à 150 nm et **en ce que** la mousse est équipée de façon ignifuge de telle sorte qu'elle résiste à l'essai au feu B2 (selon la norme DIN 4102).

2. Plaques de mousse suivant la revendication 1, **caractérisées en ce qu'**elles contiennent 0,5 à 5% en poids d'un composé organique bromé présentant une teneur en brome supérieure à 70%, comme agent ignifuge, ainsi que 0,1 à 0,5% en poids d'un composé organique labile en C-C- ou O-O-, comme agent ignifuge synergique.

3. Plaques de mousse suivant la revendication 1, **caractérisées en ce que** l'agent ignifuge est de l'hexabromocyclododécane et l'agent ignifuge synergique du dicumyle.

4. Plaques de mousse suivant la revendication 1, **caractérisées en ce qu'**elles contiennent des cellules fermées qui sont exemptes de gaz halogénés.

5. Procédé de préparation de plaques de mousse suivant la revendication 1, **caractérisé en ce qu'**on extrude et fait mousser un mélange d'un polymère de styrène, de 3 à 15% en poids d'un agent gonflant volatil, de 1 à 10% en poids de noir de fumée, de 0,5 à 5% en poids d'un composé organique bromé ayant une teneur en brome supérieure à 70% ainsi que de 0,1 à 0,5% en poids d'un composé organique labile en C-C- ou O-O-, à des températures supérieures au point de fusion du polymère de styrène.
